# EUROPEAN PATENT APPLICATION

(11) **EP 4 768 408 A1**
(43) Date of publication of application: **01.07.2026**
(21) Application number: 25867260.9
(22) Date of filing: 11.08.2025
(51) Int. Cl.: B65H 19/18, B65H 19/10, B65H 35/00, B65H 19/20, B65H 23/26, B65H 23/28, H01M 10/04, H01M 50/213, H01M 10/42

(54) **TAPE REEL SUPPLY DEVICE, INSULATING TAPE SUPPLY METHOD, BATTERY PACK, AND VEHICLE**

(30) Priority: 27.09.2024 KR 20240131422
(71) Applicant: LG ENERGY SOLUTION, LTD., Seoul 07335 (KR)
(72) Inventor: KIM, Dongwoo, Yuseong-gu, Daejeon 34122 (KR); JEON, Young Ho, Yuseong-gu, Daejeon 34122 (KR); CHAE, Seung Hun, Yuseong-gu, Daejeon 34122 (KR); BAN, Ji Seob, Yuseong-gu, Daejeon 34122 (KR); KIM, Doheon, Yuseong-gu, Daejeon 34122 (KR)
(74) Representative: Goddar, Heinz J.
(86) International application number: PCT/KR2025/012117
(87) International publication number: WO 2026/071465

(57) **Abstract**

According to one embodiment of the present invention, a tape reel supply device for supplying an insulating tape to a conveying unit comprises a supply unit, in which a plurality of tape reel cassette units, each wound with an insulating tape, are disposed on a rotatable supply body at intervals, and the supply unit replaces and supplies the insulating tape to the conveying unit.

A tape reel supply device and an insulating tape supply method according to one embodiment of the present invention have the effect of effectively replacing and supplying an insulating tape wound on a tape reel cassette unit.

## Description

### [TECHNICAL FIELD]

The present invention relates to a tape reel supply device, an insulating tape supply method, a battery pack, and a vehicle including the same; and more particularly, to a tape reel supply device for replacing and supplying a tape reel cassette unit around which an insulating tape is wound, a tape reel supply device, an insulating tape supply method, a battery pack, and a vehicle including the same.

### [BACKGROUND ART]

Secondary batteries, unlike primary batteries which are non-rechargeable, are rechargeable batteries capable of charge and discharge cycles. They are widely utilized not only in portable electronic devices but also in electric vehicles (EVs) and hybrid electric vehicles (HEVs) driven by electric power sources.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.6 V. Accordingly, when a higher output voltage is required, a battery pack may be formed by connecting a plurality of battery cells in series. In addition, a battery pack may be configured by connecting a plurality of battery cells in parallel depending on the charge/discharge capacity requirements. Therefore, the number of battery cells incorporated in the battery pack may be variously set according to the required output voltage or charge/discharge capacity.

When a plurality of battery cells are connected in series and/or in parallel to form a battery pack, it is common practice to first configure a battery module including at least one battery cell, preferably a plurality of battery cells, and then construct a battery pack by combining at least one such battery module with other components. Here, a battery module refers to a unit composed of a plurality of battery cells connected in series and/or in parallel, while a battery pack refers to a structure in which a plurality of battery modules are interconnected in series and/or in parallel to enhance capacity and output.

The battery cells constituting a battery module are classified into pouch-type, cylindrical, or prismatic types according to the external shape of the battery case.

Among these, cylindrical cells are primarily housed in a metal case having a cylindrical structure, thereby exhibiting excellent safety, and are advantageous in that they can realize high energy density by accommodating a jelly-roll-type electrode assembly therein, while also facilitating the configuration of a large-capacity power storage device by connecting multiple cells in series or in parallel.

The electrode assembly accommodated within the cylindrical case is a rechargeable power-generation element comprising a stacked structure of a positive electrode, a separator, and a negative electrode, and is classified into a jelly-roll type, a stack type, or a stack/folding type. In the jelly-roll type, a separator is interposed between elongated sheet-shaped positive and negative electrodes coated with active material, which are then wound; the stack type is a form in which a plurality of positive and negative electrodes of a predetermined size are sequentially stacked with separators interposed therebetween; and the stack/folding type is a hybrid structure combining features of the jelly-roll type and the stack type. Among them, the jelly roll-type electrode assembly has the advantages of being easy to manufacture and having a high energy density per weight.

Attach the positive terminal insulating tape to the side of the jelly roll-shaped electrode assembly to which the positive electrode collector plate is welded. During this process, it takes time to load new insulating tape after the use of the wound insulating tape is complete. Specifically, the process is interrupted by replacement of new insulating tape and loading thereof.

### [DETAILED DESCRIPTION OF INVENTION]

### [TECHNICAL PROBLEM]

It is an object of the present invention to easily supply insulating tape by replacing a tape reel cassette unit in which an insulating tape is wound.

### [TECHNICAL SOLUTION]

According to one embodiment of the present invention, a tape reel supply device for supplying an insulating tape to a conveying unit comprises a supply unit, in which a plurality of tape reel cassette units, each wound with an insulating tape, are disposed on a rotatable supply body at intervals, and the supply unit replaces and supplies the insulating tape to the conveying unit.

The supply unit can replace any one of the plurality of tape reel cassette units by rotating the supply body.

Furthermore, the tape reel supply device may further comprise a splicing unit configured to join the replaced insulating tape with the insulating tape of the conveying unit.

In addition, the splicing unit may comprise a tape cutting unit for cutting one end of an insulating tape supplied to the conveying unit, and a tape attaching unit for joining one end of the insulating tape to one end of an insulating tape supplied from the tape reel cassette unit.

Additionally, the splicing unit may further include a vacuum block that can come into contact with the insulating tape.

In addition, the tape attaching unit may further comprise a first attaching cylinder configured to move the insulating tape toward the vacuum block, and a second attaching cylinder configured to enable vacuum suction.

In addition, the tape reel cassette unit may include a main roll on which the insulating tape is wound, a first sliding roll configured to move the insulating tape wound on the main roll toward the conveying section, and a second sliding roll disposed between the main roll and the first sliding roll to guide movement of the insulating tape.

Additionally, the tape reel cassette unit may further comprise a guide extending toward the outer periphery of the supply body and configured to guide movement of the insulating tape passing through the first sliding roll.

Additionally, at least one area of the guide is formed open so that a portion of the first attachment cylinder can be inserted therein.

Furthermore, the cutting unit may include a cutter capable of cutting the insulating tape; and a cutting cylinder for raising and lowering the cutter.

Additionally, the above-described tape reel supply device may further include a stopper for stopping the operation of the conveying unit.

Alternatively, a battery pack according to one embodiment of the present invention is manufactured using the tape reel supply device described above.

Alternatively, a vehicle according to one embodiment of the present invention includes the battery pack described above.

Alternatively, a tape reel supply device for supplying an insulating tape according to one embodiment of the present invention comprises a conveying unit for transporting an insulating tape; a supply unit including a supply body and a plurality of tape reel cassette units wound with insulating tape, the supply unit being rotatable to replace and supply the tape reel cassette units to the conveying unit; and a splicing unit configured to join the replaced insulating tape with the insulating tape of the conveying unit.

Alternatively, an insulating tape supply method according to one embodiment of the present invention comprises the steps of: moving a cutting unit between a conveying unit and a first tape reel cassette unit to clamp and cut the insulating tape; adsorbing the clamped insulating tape; returning the cutting unit after cutting the insulating tape; partially supplying an insulating tape from a second tape reel cassette unit toward the conveying unit; joining the clamped insulating tape with the insulating tape supplied from the second tape reel cassette unit; and operating the second tape reel cassette unit so as to continuously supply the insulating tape to the conveying unit.

Additionally, while the cutting unit is moving, the first tape reel cassette unit can be replaced with the second tape reel cassette unit and placed on standby.

### [ADVANTAGEOUS EFFECTS]

A tape reel supply device and an insulating tape supply method according to one embodiment of the present invention have the effect of effectively replacing and supplying an insulating tape wound on a tape reel cassette unit.

### [BRIEF DESCRIPTION OF DRAWINGS]

FIG. 1 is a drawing illustrating a tape reel supply device according to one embodiment of the present invention.
FIG. 2 is an enlarged view of a supply unit and a splicing unit according to one embodiment of the present invention.
FIG. 3 is a drawing showing the internal configuration of a tape reel cassette unit according to one embodiment of the present invention.
FIGS. 4 to 10 are drawings showing an insulating tape supply method of a tape reel supply device according to one embodiment of the present invention.
FIG. 11 is a drawing showing the configuration of a tape reel supply device according to one embodiment of the present invention.
FIG. 12 illustrates a vehicle including a battery pack according to one embodiment of the present invention.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show a plurality of layers and regions. Throughout the specification, similar parts are designated by the same reference numerals. When an element such as a layer, film, region, or plate is referred to as being "on" another element, it can be directly on the other element or intervening elements may be present. Conversely, when a part is referred to as being "directly on" another part, it is to be understood that there is no other part in between. Similarly, when an element is referred to as being "under" another element, it can be directly under the other element or intervening elements may be present. Conversely, when a part is referred to as being "directly under" another part, it is to be understood that there is no other part in between.

A tape reel supply device (101) for supplying an insulating tape according to one embodiment of the present invention will be described in detail with reference to the drawings.

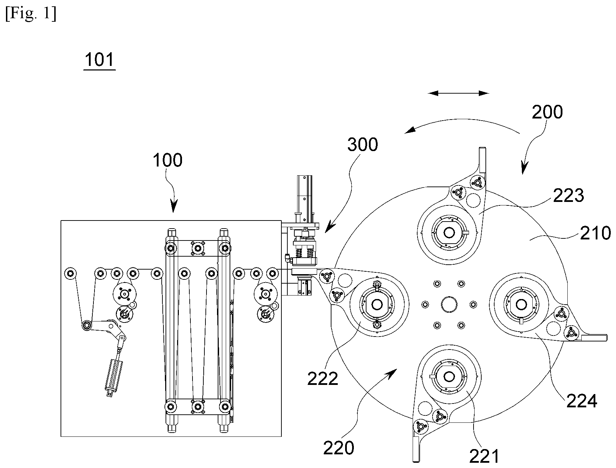

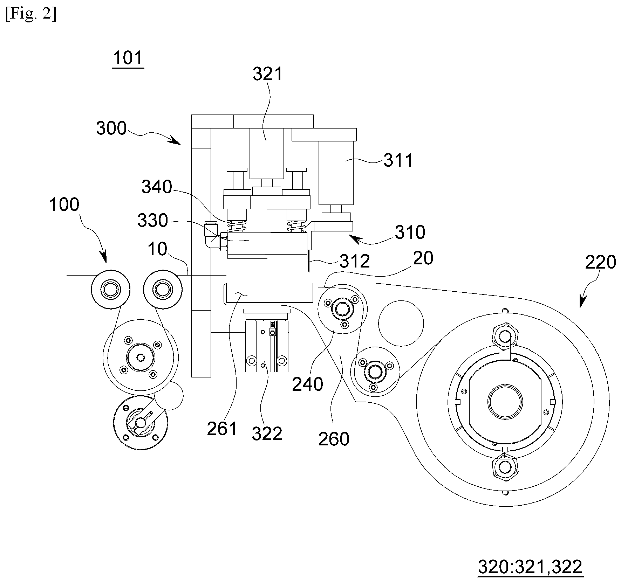

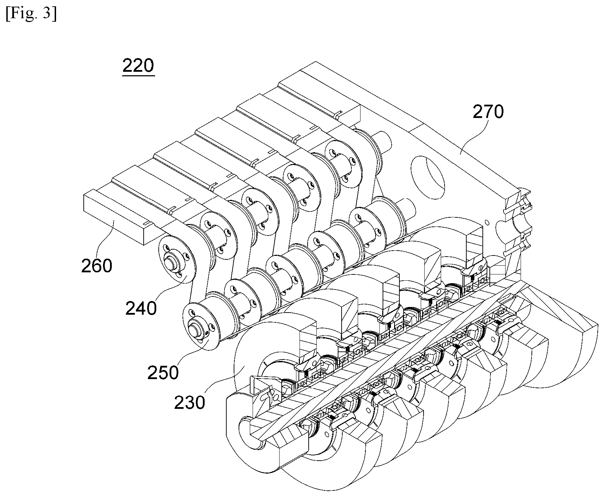

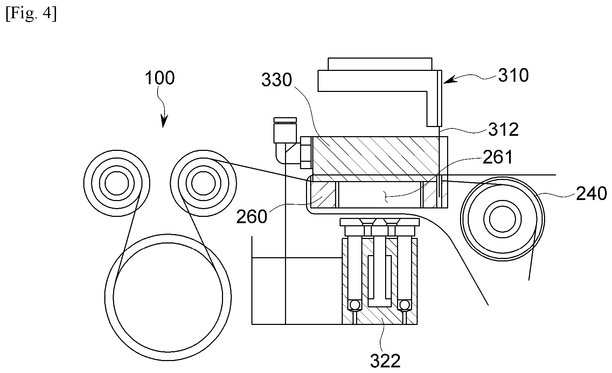

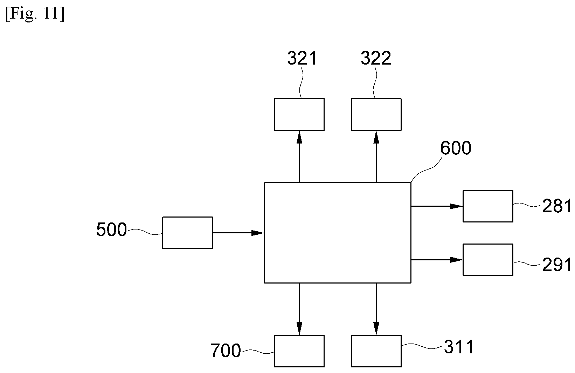

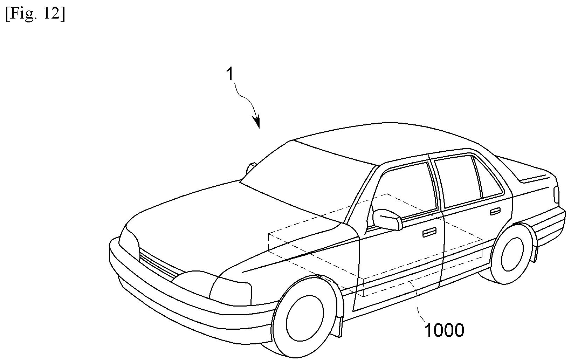

FIG. 1 is a view illustrating a tape reel supply device according to an embodiment of the present invention; FIG. 2 is an enlarged view of a supply unit and a splicing unit according to an embodiment of the present invention; FIG. 3 is a view showing the internal configuration of a tape reel cassette unit according to an embodiment of the present invention; FIGS. 4 to 10 are views showing a control process of a tape reel supply device according to an embodiment of the present invention; FIG. 11 is a view showing the configuration of a tape reel supply device according to an embodiment of the present invention; and FIG. 12 shows a vehicle including a battery pack according to an embodiment of the present invention.

According to one embodiment of the present invention, a tape reel supply device (101) for supplying an insulating tape is disposed in a process of attaching and forming an insulating tape to a positive terminal portion on the side of a jelly roll-type electrode assembly. The cylindrical Cathode Insulation Taping (CIP) process may comprise a step of attaching and forming a cathode terminal insulation tape on a side surface of the jelly roll to which a cathode collector plate is welded.

The tape reel supply device (101) supplies tape material to the CIP facility.

As shown in FIGS. 1 to 3, a tape reel supply device (101) according to one embodiment of the present invention includes a supply unit (200).

The conveying unit (100) conveys the insulating tape. The conveying unit (100) includes a plurality of rollers.

The supply unit (200) can supply the insulating tape wound on the tape reel cassette unit (220) to the conveying unit (100). A tape reel cassette unit (220) on which an insulating tape is wound may be placed in the supply unit (200). The supply unit (200) can supply the insulating tape wound on the tape reel cassette unit (220) to the conveying unit (100). The supply unit (200) can replace the tape reel cassette unit (220) to supply new insulating tape to the conveying unit (100).

The supply unit (200) may include a supply body (210), as shown in FIGS. 1 and 2. The supply body (210) may be formed in an annular shape. Additionally, a plurality of tape reel cassette units (220), each wound with insulating tape, may be disposed spaced apart from each other in the supply body (210). In addition, the supply body (210) comprises a plurality of tape reel cassette units (220) and is configured to replace and supply insulating tape to the conveying unit (100). The tape reel cassette unit (220) may comprise first, second, third, and fourth tape reel cassette units (221, 222, 223, 224).

In addition, when use of one of the plurality of tape reel cassette units (220) is completed, the supply body (210) may be rotated so that the insulating tape wound on another tape reel cassette unit (220) is supplied to the conveying unit (100). Specifically, the supply body (210) may be rotated by a rotation driving member (281) when the tape reel cassette unit (220) is to be replaced.

In addition, the tape reel supply device (101) according to one embodiment of the present invention may further comprise a splicing unit (300).

The splicing unit (300) may join the insulating tape supplied from the supply unit (200) with the insulating tape of the conveying unit (100). In addition, the splicing unit (300) may align and join the new insulating tape wound on the replaced tape reel cassette unit (220) supplied from the supply unit (200) with the insulating tape previously supplied to the conveying unit (100). That is, the splicing unit (300) may splice a portion of the previously supplied insulating tape with a portion of the replacement insulating tape.

The splicing unit (300) of the tape reel supply device (101) for supplying an insulating tape according to one embodiment of the present invention may include a tape cutting unit (310) and a tape attaching unit (320), as shown in FIG. 2.

The tape cutting unit (310) can cut one end of the insulating tape supplied to the conveying unit (100). Specifically, the tape cutting unit (310) may cut the insulating tape between the conveying unit (100) and the tape reel cassette unit (220), thereby removing the insulating tape from the used tape reel cassette unit (220).

The tape attachment unit (320) may connect one end of the insulating tape with one end of the insulating tape supplied from the replaced tape reel cassette unit (220). Furthermore, the tape attaching unit (320) may connect one end of the insulating tape supplied from the replaced tape reel cassette unit (220) with one end of the insulating tape cut at one side and positioned closer to the conveying unit (100) than the tape reel cassette unit (220). Specifically, the tape attaching unit (320) may overlap one end of the previously supplied insulating tape with one end of the replacement insulating tape and join them together.

In addition, the splicing unit (300) of the tape reel supply device (101) according to one embodiment of the present invention may further comprise a vacuum block (330), as illustrated in FIG. 2.

The vacuum block (330) can be positioned so as to be in contact with the insulating tape. One side of the vacuum block (330) can be placed to face one side of the insulating tape previously supplied to the conveying unit (100). The vacuum block (330) can be used to clamp, adsorb, or move the insulating tape.

Specifically, a vacuum can be formed inside the vacuum block (330) according to the flow of fluid for absorbing the insulating tape.

In addition, the tape attaching unit (320) of the tape reel supply device (101) for supplying an insulating tape according to one embodiment of the present invention may include a first attaching cylinder (322) and a second attaching cylinder (321), as shown in FIG. 2.

The first attaching cylinder (322) can move the insulating tape in a direction closer to the vacuum block (330). Specifically, the first attaching cylinder (322) is disposed spaced apart from the lower portion of the vacuum block (330), and can be moved so that the vacuum block (330) adsorbs the insulating tape as it is raised or lowered.

The first attaching cylinder (322) can provide force to move the insulating tape toward the vacuum block (330).

The second attaching cylinder (321) can enable the vacuum block (330) to adsorb by vacuum. Specifically, the second attaching cylinder (321) can enable the vacuum block (330) to adsorb the insulating tape by vacuum. Additionally, the second attaching cylinder (321) can control the raising and lowering of the vacuum block (330).

Alternatively, a vacuum pump that provides suction force into the vacuum block (330) may be separately provided and controlled.

In addition, the tape reel cassette unit (220) of the tape reel supply device (101) for supplying an insulating tape according to one embodiment of the present invention may include a main roll (230), a first sliding roll (240), and a second sliding roll (250), as shown in FIG. 3.

An insulating tape (10) is wound around the main roll (230). Specifically, the main roll (230) can be supported on the cassette body (270).

The first sliding roll (240) can move the insulating tape wound on the main roll (230) toward the conveying unit (100). The outer peripheral surface of the first sliding roll (240) can face the surface on which the adhesive portion of the insulating tape is formed. In addition, the first sliding roll (240) is disposed spaced apart from the main roll (230) on the cassette body (270), and the rotational center of the first sliding roll (240) may be positioned relatively higher than the center of the main roll (230).

The second sliding roll (250) can be placed between the main roll (230) and the first sliding roll (240). Additionally, the second sliding roll (250) can guide the movement of the insulating tape. Specifically, the outer peripheral surface of the second sliding roll (250) can face the surface on which the non-adhesive portion of the insulating tape is formed. Additionally, the rotation center of the second sliding roll (250) can be placed between the rotation center of the first sliding roll (240) and the rotation center of the main roll (230).

That is, the outer peripheral surfaces of the first sliding roll (240) and the second sliding roll (250) can be arranged to face different outer peripheral surfaces of the insulating tape.

For example, a plurality of first sliding rolls (240) can be spaced apart from each other based on the center of rotation. Additionally, a plurality of second sliding rolls (250) can be spaced apart from each other based on the center of rotation. Additionally, a plurality of main rolls (230) can be spaced apart from each other based on the center of rotation.

In addition, the tape reel cassette unit (220) of the tape reel supply device (101) for supplying an insulating tape according to one embodiment of the present invention may further include a guide (260).

The guide (260) can guide the movement of the insulating tape passing through the first sliding roll (240). The guide (260) can guide the movement of the insulating tape drawn out from the tape reel cassette unit (220).

Additionally, the guide (260) can be supported on the cassette body (270). Specifically, in the tape reel cassette unit (220), a guide (260) may be disposed on the supply body (210) so as to extend toward an outer periphery of the supply body (210). One side of the guide (260) may be disposed to protrude from the outer periphery of the supply body (210) so as to guide the insulating tape toward the conveying unit (100).

Furthermore, an opening (261) may be formed in the guide (260). An opening (261) may be formed in the guide (260), the opening being open in a direction parallel to the longitudinal direction of the insulating tape.

At least a portion of the first attaching cylinder (322) may be inserted into the opening (261), whereby the force provided by the first attaching cylinder (322) may assist in moving the insulating tape (10) toward and adsorbing it to the vacuum block (330). That is, the insulating tape (10) may be moved and pressed toward the vacuum block (330) by the pressing force of the first attaching cylinder (322) that has advanced toward the opening (261).

In addition, the cutting unit (310) of the tape reel supply device (101) according to one embodiment of the present invention may further comprise a cutter (312) and a cutting cylinder (311).

The cutter (312) may be capable of cutting the insulating tape. For example, the cutter (312) may be a blade capable of cutting the insulating tape when in contact with the insulating tape. Specifically, the cutter (312) moves along a portion of the vacuum block (330) or a side thereof and can come into contact with the insulating tape to cut the insulating tape.

The cutting cylinder (311) can enable the cutter (312) to be raised and lowered. The cutting cylinder (311) is supported on the body of the splicing unit (300), and can lower the cutter (312) to cut the insulating tape.

In addition, the tape reel supply device (101) for supplying an insulating tape according to one embodiment of the present invention may further include a stopper (700).

The stopper (700) can stop the movement of the transport unit (100). Specifically, the stopper (700) can limit the rotation of the roller of the transport unit (100). The stopper (700) may stop the operation of the conveying unit (100) and restrict the movement of the insulating tape in accordance with the operation of the conveying unit (100).

The stopper (700) may be actuated during replacement of the tape reel cassette unit (220) to restrict movement of the insulating tape.

In addition, the tape reel supply device (101) according to one embodiment of the present invention may further comprise a control unit (600), a detection member (500), a rotary driving member (281), and an advancing and retracting driving member (291), as illustrated in FIG. 11.

The detection member (500) may detect the state of the insulating tape of the tape reel cassette unit (220) and transmit corresponding information to the control unit (600). Additionally, based on the information from the detection member (500), the control unit (600) may determine whether replacement of the tape reel cassette unit (220) is required.

The rotary driving member (281) is controlled by the control unit (600) and can rotate the supply body (210) of the supply unit (200). The rotary drive member (281) can perform replacement of a plurality of tape reel cassette units (220).

The advancing and retracting driving member (291) may move the tape reel cassette unit (220) or the supply body (210) forward and backward so that a portion of the tape reel cassette unit (220) is inserted and positioned between the first attaching cylinder (322) and the vacuum block (330).

The control unit (600) may control the rotary driving member (281), the advancing and retracting driving member (291), the first attaching cylinder (322), the second attaching cylinder (321), the cutting cylinder (311), and the stopper (700).

Accordingly, a tape reel supply device (101) for supplying an insulating tape according to one embodiment of the present invention may supply an insulating tape by replacing a used tape reel cassette unit (220) among a plurality of tape reel cassette units (220), each wound with insulating tape, with a new tape reel cassette unit (220).

Specifically, the tape reel supply device (101) may replace the tape reel cassette unit (220) with a new one by rotation, thereby facilitating replacement of the tape reel cassette unit (220). That is, the tape reel cassette unit (220) can be easily replaced by a turret-type supply unit (200). In other words, the replacement time of the tape reel cassette unit (220) and the supply time of the replaced insulating tape can be shortened.

In addition, the tape reel supply device (101) may combine the replaced insulating tape supplied to the tape reel supply device (101) with the previously supplied insulating tape, thereby enabling stable supply through the conveying unit (100).

Hereinafter, with reference to FIGS. 1 to 11, a method of supplying a positive terminal insulating tape to the side of a jelly roll on which a positive current collector plate is welded will be described in detail. An insulating tape supply method comprises the following steps.

The control unit (600) may determine whether the tape reel cassette unit (220) requires replacement based on information transmitted from the detection member (500).

When the control unit (600) determines, based on information received from the detection member (500), that the insulating tape requires replacement, the control unit may actuate the stopper (700) to clamp and cut the insulating tape (10) currently supplied from the first tape reel cassette unit (220).

As shown in FIG. 4, the control unit (600) causes the vacuum block (330) and the cutter (312) to be lowered. Specifically, by operating the second attaching cylinder (321), the insulating tape may be clamped between the guide (260) and the vacuum block (330). Additionally, the control unit (600) may operate the cutting cylinder (311) so that the insulating tape positioned between the vacuum block (330) and the supply unit (200) is cut by the cutter (312).

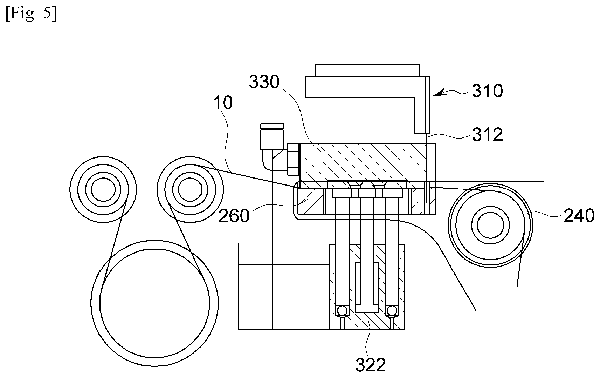

As shown in FIG. 5, the clamped insulating tape is adsorbed. Specifically, the clamped insulating tape (10) can be adsorbed by the suction force applied by the vacuum block (330). Additionally, the first attaching cylinder (322) may be extended to penetrate the opening (261) and apply pressure so that the insulating tape (10) is adsorbed onto one surface of the vacuum block (330). In this case, the impact on the vacuum block (330) can be cushioned by the buffer member (340).

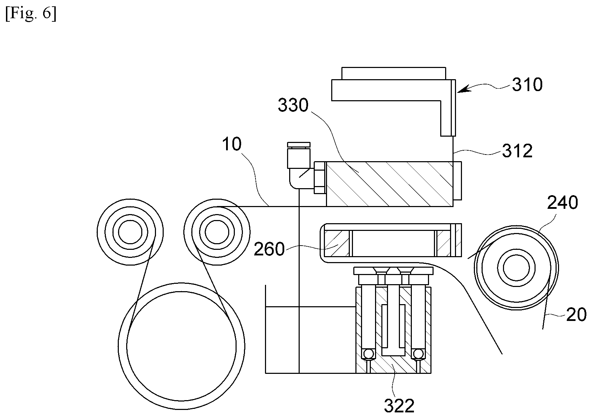

As shown in FIG. 6, the vacuum block (330) and the cutter (312), on which the clamped insulating tape (10) is adsorbed, are moved back in an upward direction. At this time, the vacuum block (330) can suck up the non-adhesive surface of the insulating tape (10).

Additionally, the first attaching cylinder (322) can be moved in a contracting direction.

While the cutter (312) moves upward, the supply body (210) of the supply unit (200) may rotate and stand by for the second tape reel cassette unit (222) to be supplied toward the supply unit (200). Specifically, the supply body (210) may be rotated so as to allow a portion of the tape reel cassette unit (220) for replacement to be introduced into the splicing unit (300). Specifically, the tape reel cassette unit (220) may be driven by an advancing and retracting driving member (291) so as to move forward and backward toward the conveying unit (100).

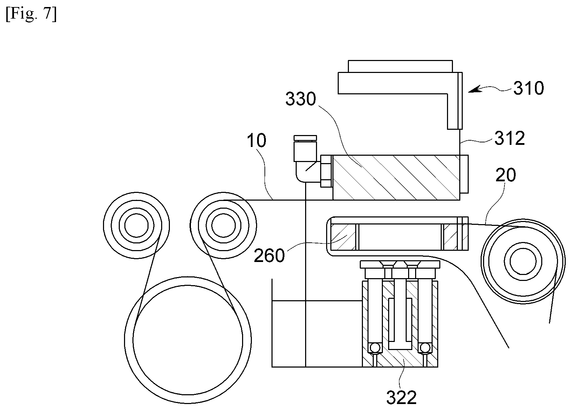

As shown in FIG. 7, the first sliding roll (240) of the second tape reel cassette unit (222) may be operated so that a portion of the insulating tape (20) is supplied toward the conveying unit (100) through an upper portion of the guide (260). Specifically, a portion of the newly supplied insulating tape (20) may overlap with a lower portion of the previously supplied insulating tape (10). That is, the adsorption surface of the insulating tape (10) adsorbed by the vacuum block (330) and the non-adsorption surface of the replacement insulating tape (20) may be spaced apart so as to face each other.

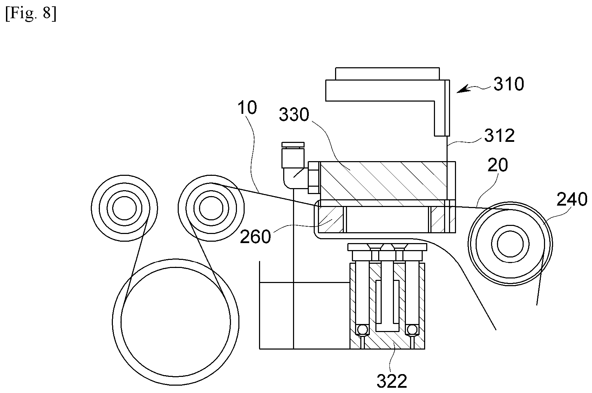

As shown in FIG. 8, the vacuum block (330) may be moved in a direction adjacent to the insulating tape supplied from the second tape reel cassette unit (222).

By operating the second attaching cylinder (321), the vacuum block (330) may be moved in a direction adjacent to the guide (260).

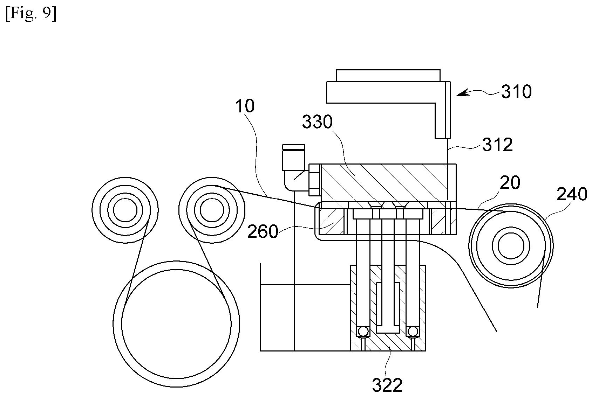

As shown in FIG. 9, the clamped insulating tape (10) and the insulating tape (20) supplied from the second tape reel cassette unit (222) may be joined together. At least a portion of the first attaching cylinder (322) can be moved in a direction in which it is inserted into the opening (261) of the guide (260). In this case, the adsorption surface of the insulating tape (10) adsorbed on the vacuum block (330) and the non-adsorption surface of the replacement insulating tape (20) can be adhered to each other. At this time, the suction force provided to the vacuum block (330) can be released. Additionally, the stopper (700) can be released to place the conveying unit (100) in an operable state.

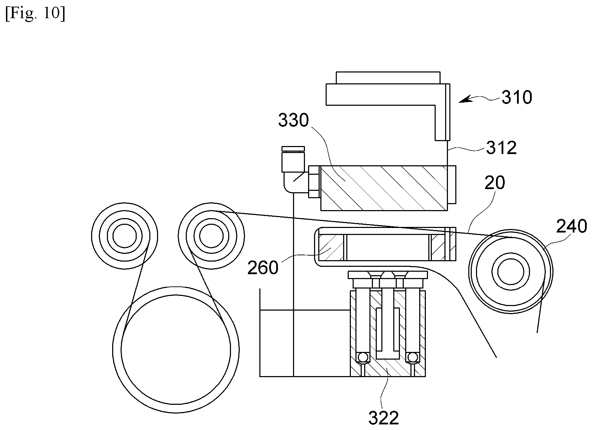

As shown in FIG. 10, the second tape reel cassette unit (222) continuously supplies the insulating tape (20) to the conveying unit (100). The second attachment cylinder (321) raises the vacuum block (330). As the rollers of the conveying unit (100) rotate, the insulating tape (10) between the guide (260) and the vacuum block (330) may be moved. That is, the previously supplied insulating tape (10) and the replacement insulating tape (20) may be joined together so as to supply the insulating tape to the conveying unit (100).

Therefore, the insulating tape supply method may effectively supply new insulating tape without causing equipment downtime in the CIP process when the tape reel cassette unit (220) is replaced.

A jelly-roll-type electrode assembly manufactured by the tape reel supply device (101) as described above may be accommodated in a battery can to manufacture a cylindrical battery cell. Additionally, a plurality of cylindrical battery cells can be accommodated in a pack case to form a battery pack (1000).

Additionally, according to one embodiment of the present invention, the automobile (1) may comprise the battery pack (1000) described above. FIG. 12 is a view illustrating an electric vehicle (1) equipped with a battery pack (1000). In the electric vehicle (1), wheels may be driven by a motor supplied with power from a battery pack (1000), thereby operating the electric vehicle.

Although the present invention has been described with reference to the preferred embodiments, it is not limited to the above-described embodiments, and various changes and modifications may be made by one of ordinary skill in the art to which the present invention pertains without departing from the spirit of the present invention.

### [INDUSTRIAL APPLICABILITY]

A tape reel supply device and an insulating tape supply method according to one embodiment of the present invention can effectively replace and supply an insulating tape wound on a tape reel cassette unit.

## Claims

1. A tape reel supply device for supplying an insulating tape to a conveying unit that conveys the insulating tape, comprising:
a supply unit, wherein a plurality of tape reel cassette units, on which the insulating tape is wound, are disposed spaced apart on a rotatable supply body, and wherein the supply unit replaces and supplies the insulating tape to the conveying unit.

2. The tape reel supply device of claim 1, wherein the supply unit replaces any one of the plurality of tape reel cassette units by rotating the supply body.

3. The tape reel supply device of claim 1, further comprising:
a splicing unit for joining the replaced insulating tape and the insulating tape of the conveying unit to each other.

4. The tape reel supply device of claim 3, wherein the splicing unit comprises:
a tape cutting unit for cutting one end of the insulating tape supplied to the conveying unit; and
a tape attaching unit for connecting one end of the insulating tape and one end of the insulating tape supplied from the tape reel cassette unit.

5. The tape reel supply device of claim 4, wherein the splicing unit further comprises:
a vacuum block that can be in contact with the insulating tape.

6. The tape reel supply device of claim 5, wherein the tape attaching unit further comprises:
a first attaching cylinder that moves the insulating tape in a direction closer to the vacuum block; and
a second attaching cylinder that enables the vacuum block to adsorb by vacuum.

7. The tape reel supply device of claim 6, wherein the tape reel cassette unit comprises:
a main roll on which the insulating tape is wound;
a first sliding roll for moving the insulating tape wound on the main roll toward the conveying unit; and
a second sliding roll disposed between the main roll and the first sliding roll to guide the movement of the insulating tape.

8. The tape reel supply device of claim 7, wherein the tape reel cassette unit further comprises:
a guide extending toward an outer periphery of the supply body to guide movement of the insulating tape passing through the first sliding roll.

9. The tape reel supply device of claim 8, wherein at least one area of the guide is formed open so that a part of the first attaching cylinder can be inserted.

10. The tape reel supply device of claim 4, wherein the cutting unit comprises:
a cutter capable of cutting the insulating tape; and
a cutting cylinder that raises and lowers the cutter.

11. The tape reel supply device of claim 1, further comprising:
a stopper for stopping an operation of the conveying unit.

12. A battery pack manufactured by the tape reel supply device as recited in any one of claims 1 to 11.

13. A vehicle, comprising a battery pack as recited in claim 12.

14. A tape reel supply device for supplying an insulating tape, the device comprising:
a conveying unit for conveying the insulating tape;
a supply unit comprising a supply body and a plurality of tape reel cassette units on which an insulating tape is wound, wherein the supply unit is rotatable to replace and supply one of the plurality of tape reel cassette units to the conveying unit; and
a splicing unit for joining the replaced insulating tape and the insulating tape of the conveying unit.

15. An insulating tape supply method, the method comprising the steps of:
moving a cutting unit between a conveying unit and a first tape reel cassette unit to clamp and cut an insulating tape;
adsorbing the clamped insulating tape;
returning the cutting unit after cutting the insulating tape;
partially supplying an insulating tape from a second tape reel cassette unit toward the conveying unit;
joining the clamped insulating tape and the insulating tape supplied from the second tape reel cassette unit; and
operating the second tape reel cassette unit to continuously supply the insulating tape to the conveying unit.

16. The method of claim 15, wherein while the cutting unit is moving, the first tape reel cassette unit is replaced with the second tape reel cassette unit, which is then placed on standby.
